**Europäisches Patentamt**

**European Patent Office**

**Office européen des brevets**

(11) Veröffentlichungsnummer: **0 216 368**
A2

# (12) EUROPÄISCHE PATENTANMELDUNG

(21) Anmeldenummer: 86113132.4

(22) Anmeldetag: 24.09.86

(51) Int. Cl.⁴: **B 29 C 45/32**
**B 29 C 45/27**

(30) Priorität: 26.09.85 DE 3534253

(43) Veröffentlichungstag der Anmeldung:
01.04.87 Patentblatt 87/14

(84) Benannte Vertragsstaaten:
AT BE CH FR GB IT LI LU NL SE

(71) Anmelder: Stübbe GmbH
Ismaninger Str. 67a
D-8000 München 80(DE)

(72) Erfinder: Kaaden, Hans-Heinrich
Friedrich-Herschel-Strasse 5
D-8000 München 80(DE)

(74) Vertreter: Schirmer, Siegfried
Osningstrasse 10
D-4800 Bielefeld 1(DE)

(54) Spritzgiessmaschine zum Herstellen von Kunststoffteilen im Spritzgless- oder Reaktionsspritzgiessverfahren.

(57) An dem Schmelzeleitkanal der mittleren geteilten Form-aufspannplatte einer Spritzgießmaschine ist ein Ver-schlußdüsensystem so angeordnet, daß neben einer schnellen Zugänglichkeit zu den einzelnen Teilen des Düsensy-stems eine für die Entnahme der Formteile aus den Formen erforderliche Trennung der mittleren geteilten Formaufspannplatte von der zugeordneten Schneckeneinheit mit einem Minimum an Aufwand möglich ist.

Hierzu weist das Düsensystem 1 einen Distanzring 2 mit einem Torpedo 4 sowie einen rechteckigen Adapter 5 und eine Verschlußdüse 6 auf, die zu einer starren Einheit auswe-chselbar miteinander verbunden sind. Mit einer Schnellsp-annvorrichtung 10 ist diese Einheit auf der mittleren geteilten bewegbaren Formaufspannplatte befestigt.

Zur Entnahme der Formteile nach oben wird die Schneckeneinheit seitlich verfahren, wobei das Verschlußdüsensystem an der mittleren Formaufspannplatte verbleibt.

Patentanwalt
## Dipl.-Ing. Siegfried Schirmer
Zugelassener Vertreter
vor dem Europäischen Patentamt

0216368

Anmelder:
Stübbe GmbH
Ismaninger Straße 67 a
8000 München 80

## Spritzgießmaschine zum Herstellen von Kunststoffteilen im Spritzgieß- oder Reaktionsspritzgießverfahren

Die Erfindung betrifft eine Spritzgießmaschine zum Herstellen von Kunststoffteilen aus Thermoplasten, Duroplasten und/oder Elastomeren im Spritzgießverfahren oder Reaktionsspritzgießverfahren, mit einer Mehrstationen-Schließeinheit in horizontaler oder vertikaler Bauweise zur Aufnahme mehrerer Formen und mit einer zugeordneten Spritzeinheit zum gleichzeitigen Abspritzen der Formen, mit einer bewegbaren mittleren längs zur Schließrichtung geteilten Formaufspannplatte, deren beide Teile durch eine Schnellspannvorrichtung zusammengehalten sind und zwischen deren beiden Teilen ein Schmelzeleitsystem angeordnet ist, das eine oder mehrere separate Schmelzeleitschienen aufweist, wobei jede Schmelzeleitschiene an ihrer Stirnseite längs zur Fließrichtung der Schmelze fest zwischen der geteilt ausgebildeten Formaufspannplatte eingespannt ist und auf einem Flansch der Schmelzeleitschiene ein mittiger Zentrierbund und ein aufgeweiteter, gerundete Seitenwandungen aufweisender Schmelzeeintritt zur Aufnahme des jeweiligen Düsensystems angeordnet ist.

Durch die Anordnung von einer oder mehreren separaten Schmelzeleitschienen zwischen den Teilen der
mittleren längs zur Schließrichtung geteilten Form-
aufspannplatten ist bei jeder Gestaltung der Form
eine schnelle und gleichmäßige Abspritzung beider
Formen gewährleistet. Die Ausbildung der mittleren
Formaufspannplatte mit der Schmelzeleitschiene erfordert nunmehr Überlegungen, wie das Verschlußdüsensystem zweckmäßigerweise ausgebildet und angeordnet
werden kann.

Der Erfindung liegt daher die Aufgabe zugrunde, bei
einer Spritzgießmaschine der aufgezeigten Gattung
das Verschlußdüsensystem so auszubilden und an den
Schmelzeleitkanal der mittleren geteilten Formaufspannplatte anzuordnen, daß neben einer schnellen
Zugänglichkeit zu den einzelnen Teilen des Düsensystems außerdem die für eine Entnahme der Formteile
aus den Formen erforderliche Trennung der mittleren
geteilten Formaufspannplatte von der zugeordneten
Schneckeneinheit mit einem Minimum an Aufwand in
waagerechter Richtung erreichbar ist.

Diese Aufgabe wird erfindungsgemäß dadurch gelöst,
daß das Düsensystem einen Distanzring mit einem
Torpedo, einen rechtwinkligen Adapter und eine Verschlußdüse aufweist, wobei alle Teile zu einer starren Einheit auswechselbar miteinander verbunden sind
und diese Einheit mittig auf der mittleren geteilten
bewegbaren Formaufspannplatte durch eine Schnellspannvorrichtung befestigt ist.

In Ausgestaltung der Erfindung sind an der Außenseite des Adapters horizontal und vertikal verlaufende Montageplatten fest angeordnet, wobei mehrere Verschlußdüsensysteme über die Montageplatten mit einer Schnellspannvorrichtung zu einer lösbaren und im Abstand zueinander veränderlichen Einheit verbunden werden können.

Zweckmäßige Ausgestaltungen der Erfindung ergeben sich aus den übrigen Unteransprüchen.

Das Verschlußdüsensystem nach der Erfindung kann als in sich starre Einheit auf der geteilten mittleren Formaufspannplatte verriegelt werden. Bei einer Entnahme der Formteile nach oben wird die Schneckeneinheit seitlich verfahren, wobei das Verschlußdüsensystem an der mittleren Formaufspannplatte verbleibt.

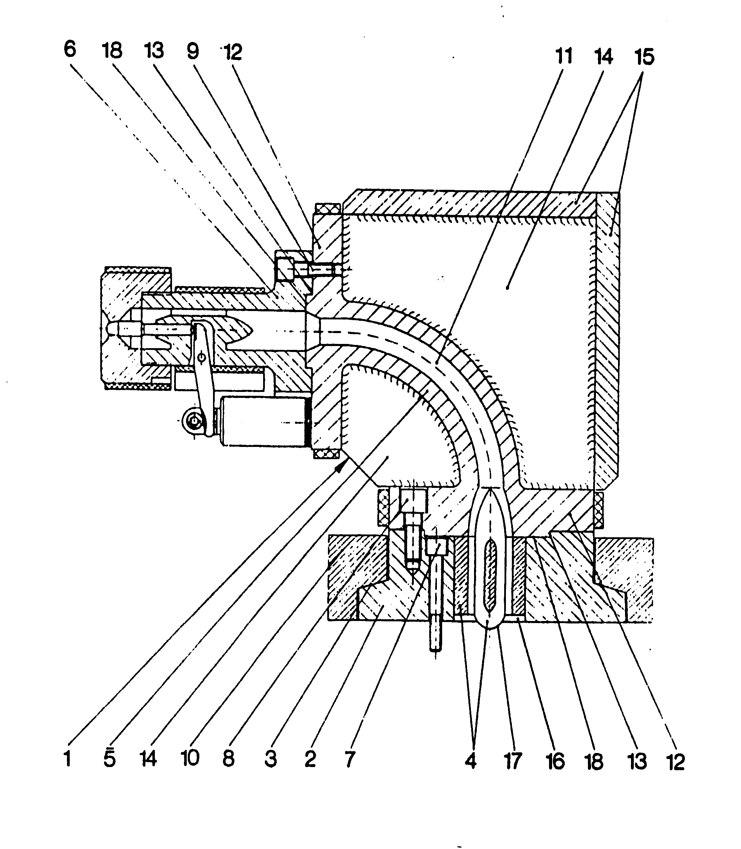

Ein Ausführungsbeispiel der Erfindung ist in der Zeichnung dargestellt und wird im folgenden näher erläutert. Die einzige Figur zeigt einen Vertikalschnitt durch ein Verschlußdüsensystem.

Ein außenbeheizter Distanzring 2 ist über Schrauben 7 fest mit der Schmelzeleitschiene der mittleren Formaufspannplatte verbunden. Die Schrauben 7 werden hierzu in Gewindebohrungen eines oberen Flansches der Schmelzeleitschiene eingeschraubt. Im Distanzring 2 lagert ein separat innenbezeizter Torpedo 4, der mit seiner unteren Begrenzung in den entsprechend geformten Schmelzeeintritt der Schmelzeleitschiene eingeführt ist. Auf der Unterseite des Distanzrings 2 ist eine Ausnehmung 16 vorhanden, die zum Aufsetzen auf den mittigen Zentrierbund der Schmelzeleitschiene ausgebildet ist.

Auf den Distanzring 2 ist ein rechtwinkliger außenbeheizter Adapter 5 über Schrauben 8 befestigt, die in einem an einer Stirnseite des Adapters 5 angeordneten Montageflansch 12 mit Zentrierbund 13 geführt sind. Die andere Stirnseite des Adapters 5 besitzt ebenfalls einen Montageflansch 12 mit Zentrierbund 13, an dem über Schrauben 9 eine beheizbare Verschlußdüse 6 lösbar angeordnet ist. Der Distanzring 2 und die Verschlußdüse 6 weisen zu den Zentrierbunden 13 des Adapters 5 je eine entsprechend ausgebildete Ausnehmung 18 auf.

Im Adapter 5 lagert ein Bogenstück mit innenliegender zentraler Schmelzeleitung 11. Das Bogenstück des Adapters 5 ist durch beidseitig angeordnete Versteifungsrippen 14 ausgesteift, wobei die auf der Außenseite des Bogenstücks angeordneten Versteifungsrippen 14 durch horizontal und vertikal verlaufende fest angeordnete Montageplatten 15 miteinander verbunden sind. Der Adapter 5 bildet durch die dargestellte und beschriebene Gestaltung eine in sich steife Konstruktion. Über die Montageplatten können mehrere Verschlußdüsensysteme 1 über eine Schnellspannvorrichtung zu einer lösbaren Einheit verbunden werden, wobei der Abstand zwischen den Verschlußdüsensystemen 1 zueinander veränderlich ist.

Alle Teile des Verschlußdüsensystems 1 sind zu einer starren Einheit auswechselbar miteinander verbunden. Diese Einheit ist mittig auf der mittleren geteilten bewegbaren Formaufspannplatte über eine Schnellspannvorrichtung 10, die zweckmäßigerweise beidseitig an einem äußeren Befestigungsbund 3 des Distanzrings 2 angreift, verriegelbar angeordnet.

- Patentansprüche -

Anmelder:
Stübbe GmbH
Ismaninger Straße 67 a
8000 München 80

Patentansprüche:

1. Spritzgießmaschine zum Herstellen von Kunststoffteilen aus Thermoplasten, Duroplasten und/oder
Elastomeren im Spritzgießverfahren oder Reaktionsspritzgießverfahren, mit einer Mehrstationen-
Schließeinheit in horizontaler oder vertikaler
Bauweise zur Aufnahme mehrerer Formen und mit einer
zugeordneten Spritzeinheit zum gleichzeitigen Abspritzen der Formen, mit einer bewegbaren mittleren längs zur Schließrichtung geteilten Formaufspannplatte, deren beide Teile durch eine Schnellspannvorrichtung zusammengehalten sind und zwischen
deren beiden Teilen ein Schmelzeleitsystem angeordnet ist, das eine oder mehrere separate Schmelzeleitschienen aufweist, wobei jede Schmelzeleitschiene an ihrer Stirnseite längs zur Fließrichtung der Schmelze fest zwischen der geteilt ausgebildeten Formaufspannplatte eingespannt ist und
auf einem Flansch der Schmelzeleitschiene ein
mittiger Zentrierbund und ein aufgeweiteter, gerundete Seitenwandungen aufweisender Schmelzeeintritt zur Aufnahme des jeweiligen Düsensystems angeordnet ist, dadurch gekennzeichnet, daß das Düsensystem (1) einen Distanzring (2) mit einem Torpedo (4), einen rechtwinkligen Adapter (5) und eine Verschlußdüse (6) aufweist, wobei alle Teile zu einer starren Einheit auswechselbar miteinander verbunden und diese Einheit mittig auf der mittleren geteilten bewegbaren Formaufspannplatte durch eine Schnellspannvorrichtung (10) befestigt ist.

2. Spritzgießmaschine nach Anspruch 1, dadurch gekennzeichnet, daß der Distanzring (2) außenbeheizbar ausgebildet ist.

3. Spritzgießmaschine nach Anspruch 1 oder 2, dadurch gekennzeichnet, daß auf der Unterseite des Distanzrings (2) eine Ausnehmung (16) angeordnet ist, die zum Aufsetzen auf den mittigen Zentrierbund der Schmelzeleitschiene ausgebildet ist.

4. Spritzgießmaschine nach einem der Ansprüche 1 bis 3, dadurch gekennzeichnet, daß der Distanzring (2) mit der Schmelzeleitschiene verbunden ist.

5. Spritzgießmaschine nach Anspruch 4, dadurch gekennzeichnet, daß der Distanzring (2) auf der Schmelzeleitschiene angeschraubt ist.

6. Spritzgießmaschine nach einem der Ansprüche 1 bis 5, dadurch gekennzeichnet, daß der Distanzring (2) einen äußeren Befestigungsbund (3) aufweist.

7. Spritzgießmaschine nach einem der Ansprüche 1 bis 6, dadurch gekennzeichnet, daß der Torpedo (4) separat innenbeheizbar ausgebildet ist.

8. Spritzgießmaschine nach einem der Ansprüche 1 bis 6, dadurch gekennzeichnet, daß der Torpedo (4) mit dem unteren abgerundet verlaufenden Teil (17) aus dem Distanzring (2) herausragt und im an die mittlere Formaufspannplatte angeschlossenen Zustand in den Schmelzeeintritt der Schmelzeleitschiene hineinragt.

9. Spritzgießmaschine nach einem der Ansprüche 1 bis 8, dadurch gekennzeichnet, daß der Adapter (5) ein Bogenstück mit innenliegender zentraler Schmelzeleitung (11) besitzt, wobei an jeder Stirnseite ein Montageflansch (12) mit Zentrierbund (13) angeordnet ist.

10. Spritzgießmaschine nach Anspruch 9, dadurch gekennzeichnet, daß das Bogenstück des Adapters (5) beidseitig eine oder mehrere fest angeordnete Versteifungsrippe(n) (14) aufweist.

11. Spritzgießmaschine nach Anspruch 9 oder 10, dadurch gekennzeichnet, daß an die auf der Außen-

0216368

seite des Bogenstücks angeordneten Versteifungsrippen (14) horizontal und vertikal verlaufende
Montageplatten (15) fest angeordnet sind.

12. Spritzgießmaschine nach einem der Ansprüche 1
bis 11, dadurch gekennzeichnet, daß mehrere Verschlußdüsensysteme (1) über die Montageplatten (15)
mit einer Schnellspannvorrichtung zu einer Einheit verbunden sind.

13. Spritzgießmaschine nach Anspruch 12, dadurch gekennzeichnet, daß die Verbindung mehrerer Verschlußdüsensysteme über die Montageplatten (15) lösbar
und im Abstand zueinander veränderlich ausgebildet
ist.

14. Spritzgießmaschine nach einem der Ansprüche 1
bis 13, dadurch gekennzeichnet, daß die Verschlußdüse (6) lösbar auf dem Adapter (5) befestigt ist.

15. Spritzgießmaschine nach einem der Ansprüche 1
bis 14, dadurch gekennzeichnet, daß die Verschlußdüse (6) beheizbar ausgebildet ist.

16. Spritzgießmaschine nach einem der Ansprüche 1
bis 15, dadurch gekennzeichnet, daß die Verschlußdüse (6) und der Distanzring (2) je eine Ausnehmung (18) entsprechend der Zentrierbunde (13) des
Adapters (5) aufweisen.

0216368

752/58-96

Aufstellung der Bezugszeichen:

| | |
|---|---|
| 1 | Verschlußdüsensystem |
| 2 | Distanzring |
| 3 | Befestigungsbund |
| 4 | Torpedo |
| 5 | Adapter |
| 6 | Verschlußdüse |
| 7 | Schraube für 2 |
| 8 | Schraube |
| 9 | Schraube |
| 10 | Schnellspannvorrichtung |
| 11 | Schmelzeleitung |
| 12 | Montageflansch von 5 |
| 13 | Zentrierbund |
| 14 | Versteifungsrippen |
| 15 | Montageplatten |
| 16 | Ausnehmung in 2 |
| 17 | untere Begrenzung von 4 |
| 18 | Ausnehmung in 2 + 6 |